# EUROPÄISCHE PATENTSCHRIFT

(11) **EP 4 528 181 B1**
(45) Veröffentlichungstag und Bekanntmachung des Hinweises auf die Patenterteilung: **11.11.2026**
(21) Anmeldenummer: 23199332.0
(22) Anmeldetag: 25.09.2023
(51) Int. Cl.: F25B 21/00, F25B 49/02

(54) **VORRICHTUNG UND VERFAHREN ZUR DYNAMISCHEN VENTILSTEUERUNG IN EINEM MAGNETOKALORISCHEN HEIZ- UND KÜHLGERÄT**
APPARATUS AND METHOD FOR DYNAMIC VALVE CONTROL IN A MAGNETOCALORIC HEATING AND COOLING DEVICE
DISPOSITIF ET PROCÉDÉ DE COMMANDE DYNAMIQUE DE SOUPAPE DANS UN APPAREIL DE CHAUFFAGE ET DE REFROIDISSEMENT MAGNÉTOCALORIQUE

(43) Veröffentlichungstag der Anmeldung: 26.03.2025
(73) Patentinhaber: Magnotherm Solutions GmbH, 64287 Darmstadt (DE)
(72) Erfinder: Benke, Dimitri, 64846 Groß Zimmern (DE); Pickett, Jeffrey, 64295 Darmstadt (DE); Lehmann, Martin, 64297 Darmstadt (DE); Quehl, Sarah, 64285 Darmstadt (DE)
(74) Vertreter: Tergau & Walkenhorst Intellectual Property GmbH

(56) Entgegenhaltungen:
- CN-A- 112 673 220
- KR-B1- 101 819 521

## Beschreibung

Die Erfindung betrifft Vorrichtungen und Verfahren zur dynamischen Ventilsteuerung in einem magnetokalorischen Heiz- und Kühlgerät.

Im Sinne dieser Anmeldung ist das Steuern eines Ventils in erster Linie so zu verstehen, dass die Ventilschaltzeit, also die Zeitspanne, wie lange das Ventil geöffnet bzw. geschlossen ist, beeinflusst wird. Es ist ebenso denkbar, alternativ oder zusätzlich dazu die Geschwindigkeit des Öffnungs- und Schließvorgangs zu beeinflussen.

Die einem magnetokalorischen Heiz- und Kühlgerät zugrundeliegenden physikalischen Effekte sind sowohl für den Heiz- als auch für den Kühlmodus die gleichen, wobei der besseren Übersicht halber der Aufbau und die Wirkungsweise der Erfindung im Kühlmodus beschrieben wird. Die Erfindung ist ebenso geeignet, eine dynamische Ventilsteuerung in einem magnetokalorischen Heiz- und Kühlgerät im Heizmodus zu realisieren. In diesem Fall sind die Ventilstellungen und daraus resultierend die Strömungsrichtungen des Fluids entsprechend des magnetokalorischen Zyklus angepasst.

KR 101 819 521 B1 offenbart ein magnetisches Kühlsystem mit einer Mehrzahl aktiver magnetischer Regeneratoren, welche von einem Fluid durchflossen werden und wobei die Ein-/Auslassventile in Abhängigkeit gemessener Austrittstemperaturen des Fluids geregelt werden.

CN 112 673 220 A offenbart einen magnetischen Gefrierapparat, in welchem zwei aktive magnetokalorische Regeneratoren durch zwei Verbindungsleitungen verbunden sind.

Bei der sog. magnetischen Kühlung wird der magnetokalorische Effekt für die Realisierung eines Kreisprozesses genutzt. Dazu wird ein magnetokalorisches Material innerhalb eines mit einem Fluid gefüllten Hydraulikkreises wechselweise magnetisiert und entmagnetisiert. Das magnetokalorische Material ist von Fluid umgeben, wodurch es zu einer Wärmeübertragung zwischen den beiden kommt.

Die mit diesem Effekt erreichbaren Temperaturänderungen sind bei moderaten Magnetfeldern geringer als in den meisten alltäglichen und industriellen Anwendungen benötigt wird. Um dieses Problem zu umgehen, wird das eingesetzte magnetokalorische Material in Form eines Aktiven Magnetischen Regenerators (AMR) eingesetzt. Bei diesem Konzept wird die Strömungsrichtung des Fluids in schneller Folge und synchron zur Magnetisierung und Entmagnetisierung gewechselt und so Wärme kontinuierlich durch den Hydraulikkreis transportiert, wobei die Wärme an entsprechenden Stellen durch einen Wärmetauscher abgeführt wird. Der Wechsel der Strömungsrichtung erfolgt üblicherweise mit einer Frequenz von 0,1-10 Hz, aber auch höhere bzw. niedrigere Frequenzen sind denkbar. Eine übliche Umsetzung dieses hydraulischen Umschaltvorgangs ist die Nutzung von elektromechanischen Ventilen, die auf Basis der gemessenen Position eines rotierenden Permanentmagneten öffnen und schließen und so die Strömungsrichtung im AMR umkehren können.

Um die Effizienz eines solchen Systems zu maximieren, müssen die Ventile innerhalb des Hydraulikkreises präzise gesteuert werden. Insbesondere sollte der Nettodurchfluss durch einen AMR bei möglichst Null liegen, damit kein warmes Fluid auf die kalte Seite des Systems gelangt und so Kühlleistung und Effizienz verringert. Beispielsweise durch Fertigungstoleranzen oder Ablagerungen ist jedoch der Strömungswiderstand je nach Strömungsrichtung häufig nicht identisch, was bei identischen Ventilschaltzeiten für beide Strömungsrichtungen den oben beschriebenen unerwünschten Effekt mit sich bringt, da in der Strömungsrichtung mit geringerem Strömungswiderstand eine größere Menge Fluid durch den AMR strömt.

In bestimmten Anwendungen ist es erwünscht, mehrere AMRs in Reihe hintereinander zu schalten, um so die erreichbare Temperaturspanne zu erhöhen. In solchen Anordnungen kommt es durch einen Nettofluss ungleich Null zu einer großen Temperaturdifferenz in den verschiedenen Kreisläufen, die sich im Gesamtsystem ergeben. Dies führt zu einem Vermischen der verschiedenen Temperaturniveaus auf der kalten Seite, was die Kühlleistung noch stärker beeinträchtigt als in einem einfacheren System ohne Reihenschaltung.

Vorrichtungen und Verfahren, den Nettodurchfluss durch einzelne AMRs mit Hilfe der Steuerung von Ventilen zu minimieren, sind im Stand der Technik bekannt.

In [1, 2] haben Eriksen et al. ein Angleichen der Strömungswiderstände mit Hilfe von zusätzlichen Nadelventilen realisiert. Die Nadelventile sind hierzu an jedem AMR angebracht, um einen zusätzlichen regelbaren Strömungswiderstände zu bewirken und so den Gesamtwiderstand in jedem Unterkreislauf des hydraulischen Systems angleichen zu können. Nachteilig ist hierbei, dass die Nadelventile einen zusätzlichen Widerstand erzeugen und damit der Energieverbrauch ansteigt. Zudem ist es mit viel Aufwand verbunden, alle Nadelventile manuell einzustellen, da für jeden hydraulischen Unterkreislauf der Druckverlust und die Strömungsrate gemessen werden muss.

In [3, 4] haben Masche et al. durch einmalige manuelle Anpassung der Öffnungsdauer der Ventile einzelner AMRs den Nettodurchfluss durch diese minimiert und die Leistungsfähigkeit des Gesamtsystems gesteigert. Nachteilig an dieser Lösung ist, dass durch die erhöhte Leistungsfähigkeit das gesamte Temperaturniveau auf der kalten Seite verändert wird. Durch das veränderte Temperaturniveau ändern sich wiederum die Strömungswiderstände. Durch die veränderten Strömungswiderstände ist wiederum die neu eingestellte Öffnungsdauer nicht mehr optimal. Ein weiterer Nachteil ergibt sich beim Tausch eines AMRs oder der Fertigung mehrerer Geräte. Die statische Einstellung erfordert für jeden AMR, jedes Gerät, jede Kombination an Strömungswiderständen, jede Änderung an der hydraulischen Verschaltung ein neues Ermitteln der Regelparameter.

Beide Lösungen eint zudem der Nachteil, dass im Betrieb durch Erosion, Korrosion, Materialermüdung oder Ablagerungen Änderungen im Strömungsverhalten verursacht werden, was ein erneutes manuelles Nachjustieren erforderlich macht. Dies macht die Methoden ineffizient und unpraktikabel, insbesondere für eine Anwendung vor Ort beim Kunden.

Der vorliegenden Erfindung gingen Überlegungen der Erfinder voraus, durch Messung der Fluidmenge, die in einem Zyklus durch den AMR strömt, die Ventile so zu steuern, dass der Nettodurchfluss minimal ist. Dieser Ansatz wurde erprobt, hat sich aber als nicht erfolgreich herausgestellt. Eine erfolgreiche Umsetzung dieser Methode ist nicht bekannt. Die technische Schwierigkeit besteht hierbei insbesondere in der nicht ausreichenden Geschwindigkeit und Präzision von Fluidmengenmessungen. Um die Ventile ausreichend schnell und präzise steuern zu, sind die Messungen wirtschaftlich sinnvoller Strömungssensoren weder schnell noch präzise genug.

### Aufgabe

Aufgabe der vorliegenden Erfindung ist es, die Ventilschaltzeiten in einem Hydraulikkreis eines magnetokalorischen Heiz- und Kühlgeräts dynamisch und zuverlässig anzupassen. Zu diesem Zweck sollen eine geeignete Vorrichtung und ein mit der Vorrichtung durchführbares Verfahren angegeben werden.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht. Die Verwendung der Einzahl soll die Mehrzahl nicht ausschließen, was auch im umgekehrten Sinn zu gelten hat, soweit nichts Gegenteiliges offenbart ist. Im Folgenden werden einzelne Verfahrensschritte näher beschrieben. Die Schritte müssen nicht notwendigerweise in der angegebenen Reihenfolge durchgeführt werden und das zu schildernde Verfahren kann auch weitere, nicht genannte Schritte aufweisen.

In Bezug auf die Vorrichtung wird die Aufgabe erfindungsgemäß gelöst durch Vorrichtungen mit den Merkmalen der Ansprüche 1 oder 2. Demnach ist eine Vorrichtung zur dynamischen Ventilsteuerung in einem magnetokalorischen Heiz- und/oder Kühlgerät vorgesehen, mit einer Ventilsteuereinheit, einer Mehrzahl aktiver magnetischer Regeneratoren, wobei die aktiven magnetischen Regeneratoren derart ausgebildet sind, dass sie in einer ersten und in einer zweiten Strömungsrichtung von einem Fluid durchströmt werden können. Die Vorrichtung weist ferner eine Mehrzahl Temperatursensoren auf, wobei die Temperatursensoren mit der Ventilsteuereinheit verbunden und eingerichtet sind, die Temperatur des Fluids an einem Messpunkt zu ermitteln und die ermittelte Temperatur an die Ventilsteuereinheit zu übertragen. Zudem weist die Vorrichtung Einlassventile und Auslassventile auf, wobei die Einlassventile und die Auslassventile das Durchströmen des Fluids durch die aktiven magnetischen Regeneratoren regeln und eingerichtet sind, durch die Ventilsteuereinheit gesteuert zu werden.

Die Ventilsteuereinheit wertet die übertragenen Temperaturen aus und steuert in Abhängigkeit des Ergebnisses der Auswertung die Einlass- und die Auslassventile. Die Steuerung der Einlass- und der Auslassventile erfolgt derart, dass die Differenz zwischen den an verschiedenen Messpunkten ermittelten Temperaturen minimiert wird.

Die Erfindung realisiert entsprechend eine Kombination aus fortwährender Temperaturmessung und einem dynamischen Regelkreis, der kontinuierlich die Ventilschaltzeiten überwacht und anpasst, sodass die Temperaturen bspw. auf der kalten Seite aller hydraulischen Unterkreisläufe möglichst identisch sind. Die Einlass- und Auslassventile können bspw. über ein dediziertes 2/2-Einlassventil und ein dediziertes 2/2-Auslassventil pro aktivem magnetischen Regenerator realisiert sein. Ebenso denkbar sind Varianten, bei denen die Einlass- und Auslassventile durch 3/2- bzw. 6/2-Ventile realisiert sind. Denkbare Varianten hierzu sind bspw. zwei 3/2-Ventilen pro zu einem Regeneratorpaar zusammengefassten zwei aktiven magnetischen Regeneratoren oder eine Kombination aus einem 3/2-Ventil mit zwei Rückschlagventilen pro aktivem magnetischen Regenerator oder ein 6/2-Ventil pro Regeneratorpaar oder auch Kombinationen aus den genannten Varianten.

Durch die Verbindung aus genauer Temperaturmessung und schneller Anpassung der Ventilschaltzeiten ist es überdies möglich, die Temperatur des Fluids an jedem AMR im laufenden Betrieb anzugleichen und so eine Vermischung von Fluidmengen mit unterschiedlichen Temperaturen zu verhindern. Dies steigert sowohl Leistung als auch Effizienz des magnetokalorischen Heiz- und Kühlgeräts. Insbesondere bei komplexeren Anordnungen wie Reihenschaltungen ist das Vermeiden einer Vermischung von Fluidmengen mit unterschiedlichen Temperaturen durch das dynamische Anpassen der Ventilschaltzeiten besonders vorteilhaft, da ohne eine solche Anpassung derartige Reihenschaltungen gar nicht in erst in effizienter Weise zu realisieren wären. Durch die dynamische Ventilsteuerung ist es zudem möglich, AMRs zu tauschen ohne die weiteren Betriebsparameter neu zu ermitteln und anpassen zu müssen. Dies ist auch bei der Herstellung von magnetokalorischen Heiz- und Kühlgeräten von Vorteil, da so nicht erst manuell Regelparameter ermittelt werden müssen, um einen optimalen Betrieb des magnetokalorischen Heiz- und Kühlgerätes zu realisieren.

Wenn die Messpunkte an funktionsgleichen Ein- bzw. Auslässen unterschiedlicher aktiver magnetischer Regeneratoren, bevorzugt im gleichen Abstand zum entsprechenden aktiven magnetischen Regenerator, angeordnet sind, kann die Auswertung der übertragenen Temperaturen besonders einfach durchgeführt werden. Durch die symmetrische Anordnung in den verschiedenen Teilen des Hydraulikkreises relativ zu den entsprechenden aktiven magnetischen Regeneratoren ist die Vergleichbarkeit der gemessenen Temperaturen besonders zuverlässig gegeben.

Erfindungsgemäß sind mehrere aktive magnetische Regeneratoren hydraulisch in Reihe geschaltet. Damit kann die erreichbare Temperaturspanne durch die dynamische Ventilsteuerung erhöht werden, ohne dass die Kühlleistung durch Vermischen der Temperaturniveaus beeinträchtigt wird.

Weist die Ventilsteuereinheit einen PI-Regler auf und sind die Einlass- und Auslassventile elektromechanische Umschaltventile, können die Ventilschaltzeiten besonders schnell angepasst werden. Auf diese Weise sind noch höhere Frequenzen für das Wechseln der Strömungsrichtung möglich.

Erfindungsgemäß sind in einer Ausführungsform jeweils zwei aktive magnetische Regeneratoren hydraulisch in Reihe geschaltet und bilden ein Regeneratorpaar und und die Vorrichtung weist eine Mehrzahl Regeneratorpaare auf, wobei die Steuerung der Einlass- und der Auslassventile derart erfolgt, dass die Differenz zwischen den im Bereich verschiedener Regeneratorpaare ermittelten Temperaturen minimiert wird. Dadurch kann der jeweilige Nettodurchfluss durch alle Regeneratorpaare gleichzeitig und besonders zuverlässig minimiert werden.

Erfindungsgemäß sind die aktiven magnetischen Regeneratoren eines Regeneratorpaares durch zwei Verbindungsleitungen miteinander verbunden und das Fluid durchströmt je Strömungsrichtung nur eine der Verbindungsleitungen. Die Messpunkte sind an Verbindungsleitungen angeordnet, welche in gleicher Richtung von dem Fluid durchströmt werden, wodurch die Temperatur des Fluids an den Messpunkten besonders einfach und präzise gemessen wird, ohne dass die Messung von der direkten Umgebung des Messpunkts beeinflusst wird oder ein aufwändiges Anbringen eines Temperatursensors an dafür weniger geeigneter Stelle notwendig wird.

Erfindungsgemäß sind mehrere Regeneratorpaare hydraulisch parallel geschaltet. Dadurch kann das Volumen des durch den Hydraulikkreis strömenden Fluids unter Vermeidung des Vermischens von Fluidmengen mit unterschiedlichen Temperaturen erhöht werden, wodurch auch die durch das magnetokalorische Heiz- und Kühlgerät abführbare Wärmemenge erhöht wird.

Erfindungsgemäß sind in einer anderen Ausführungsform mehr als zwei aktive magnetische Regeneratoren hydraulisch in Reihe geschaltet und bilden eine Regeneratorkaskade, wobei die Vorrichtung eine Mehrzahl Regeneratorkaskaden aufweist und die Steuerung der Einlass- und Auslassventile derart erfolgt, dass die Differenz zwischen den im Bereich verschiedener Regeneratorkaskaden ermittelten Temperaturen minimiert wird. Dadurch kann die Temperaturspanne im Vergleich zu Vorrichtungen mit Regeneratorpaaren weiter erhöht werden, ohne dass die Kühlleistung durch Vermischen von Fluidmengen mit unterschiedlichen Temperatur beeinträchtigt wird.

Erfindungsgemäß sind zwei benachbarte aktive magnetische Regeneratoren innerhalb einer Regeneratorkaskade durch zwei Verbindungsleitungen miteinander verbunden und das Fluid durchströmt je Strömungsrichtung nur eine der Verbindungsleitungen, wobei die Messpunkte an Verbindungsleitungen angeordnet sind, welche in gleicher Richtung von dem Fluid durchströmt werden. Dadurch kann die Temperatur des Fluids an den Messpunkten innerhalb der Regeneratorkaskade besonders präzise gemessen werden, ohne dass die Messung von der direkten Umgebung des Messpunkts beeinflusst wird oder ein aufwändiges Anbringen eines Temperatursensors an dafür weniger geeigneter Stelle notwendig wird.

Erfindungsgemäß sind mehrere Regeneratorkaskaden hydraulisch parallel geschaltet. Damit kann das Volumen des durch den Hydraulikkreis strömenden Fluids unter Vermeidung des Vermischens von Fluidmengen mit unterschiedlichen Temperaturen noch weiter erhöht werden, wodurch auch die durch das magnetokalorische Heiz- und Kühlgerät abführbare Wärmemenge erhöht wird.

Weist die Vorrichtung einen rotierbaren Magneten auf, wobei der rotierbare Magnet im Betrieb in magnetische Wechselwirkung mit den aktiven magnetischen Regeneratoren tritt und weist die Vorrichtung ferner einen Drehwinkelsensor auf, wobei der Drehwinkelsensor mit der Ventilsteuereinheit verbunden und eingerichtet ist, den Drehwinkel des rotierbaren Magneten zu ermitteln und an die Ventilsteuereinheit zu übertragen und wertet die Ventilsteuereinheit den übertragenen Drehwinkel aus und steuert zusätzlich zur Abhängigkeit des Ergebnisses der Auswertung der Temperaturen auch in Abhängigkeit des Ergebnisses der Auswertung des Drehwinkels die Einlass- und die Auslassventile, kann die die Strömungsrichtung des Fluids besonders schnell und zuverlässig synchron zur Magnetisierung und Entmagnetisierung gewechselt werden. Die Erfindung betrifft auch ein magnetokalorisches Heiz- und/oder Kühlgerät mit den genannten Komponenten, insbesondere einer Vorrichtung zur dynamischen Ventilsteuerung.

Die Aufgabe wird ferner erfindungsgemäß gelöst durch Verfahren mit den Merkmalen der Ansprüche 7 oder 8. Die Temperatur des Fluids wird an mehreren Messpunkten ermittelt und die ermittelten Temperaturen an die Ventilsteuereinheit übertragen. Die übertragenen Temperaturen werden von der Ventilsteuereinheit ausgewertet und die Einlass- und Auslassventile in Abhängigkeit des Ergebnisses der Auswertung derart gesteuert, dass die Differenz zwischen den an verschiedenen Messpunkten ermittelten Temperaturen minimiert wird. Bevorzugterweise wird die Differenz zwischen den an verschiedenen Messpunkten ermittelten Temperaturen durch Anpassen der Ventilschaltzeiten für jeden Durchlauf des magnetokalorischen Zyklus minimiert.

In einer erfindungsgemäßen Ausführungsform werden die Einlass- und Auslassventile in Abhängigkeit des Ergebnisses der Auswertung derart gesteuert, dass die Differenz zwischen den innerhalb verschiedener Regeneratorpaare ermittelten Temperaturen minimiert wird, kann der jeweilige Nettodurchfluss durch alle Regeneratorpaare gleichzeitig und besonders zuverlässig minimiert werden.

In einer weiteren erfindungsgemäßen Ausführungsform werden die Einlass- und Auslassventile in Abhängigkeit des Ergebnisses der Auswertung derart gesteuert, dass die Differenz zwischen den innerhalb verschiedener Regeneratorkaskaden ermittelten Temperaturen minimiert wird, kann die Temperaturspanne im Vergleich zu Verfahren mit Vorrichtungen mit Regeneratorpaaren weiter erhöht werden, ohne dass die Kühlleistung durch Vermischen der Temperaturniveaus beeinträchtigt wird.

Wird zusätzlich eine Vorrichtung gemäß Anspruch 11 zur Verfügung gestellt und wird der Drehwinkel des rotierbaren Magneten ermittelt, der ermittelte Drehwinkel an die Ventilsteuereinheit übertragen, der übertragene Drehwinkel von der Ventilsteuereinheit ausgewertet, die Einlass- und Auslassventile sowohl in Abhängigkeit des Ergebnisses der Auswertung der Temperaturen als auch in Abhängigkeit des Ergebnisses der Auswertung des Drehwinkels gesteuert, kann die Strömungsrichtung des Fluids besonders schnell und zuverlässig synchron zur Magnetisierung und Entmagnetisierung gewechselt werden.

Im Übrigen lassen sich die auf die Vorrichtung bezogenen Merkmale und Vorteile entsprechend auf das Verfahren übertragen, und umgekehrt, so dass an dieser Stelle auf weitere Wiederholungen verzichtet wird.

### Figurenbeschreibung

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich allein oder zu mehreren in Kombination miteinander verwirklicht sein. Die Möglichkeiten, die Aufgabe zu lösen, sind nicht auf das Ausführungsbeispiel beschränkt. So umfassen beispielsweise Bereichsangaben stets alle - nicht genannten - Zwischenwerte und alle denkbaren Teilintervalle. Das Ausführungsbeispiel ist in den Figuren schematisch dargestellt. Gleiche Bezugszeichen in den einzelnen Figuren bezeichnen dabei gleiche oder funktionsgleiche bzw. hinsichtlich ihrer Funktionen einander entsprechende Elemente.

Im Einzelnen zeigt:
Fig. 1 den schematischen Aufbau eines Heiz- und Kühlgeräts mit einer Vorrichtung zur dynamischen Ventilsteuerung, wobei die Vorrichtung als Teil eines Hydraulikkreislaufs dargestellt ist;
Fig. 2 den schematischen Aufbau des Heiz- und Kühlgeräts aus Fig. 1 in analoger Weise, allerdings während eines anderen Schrittes des magnetokalorischen Zyklus.

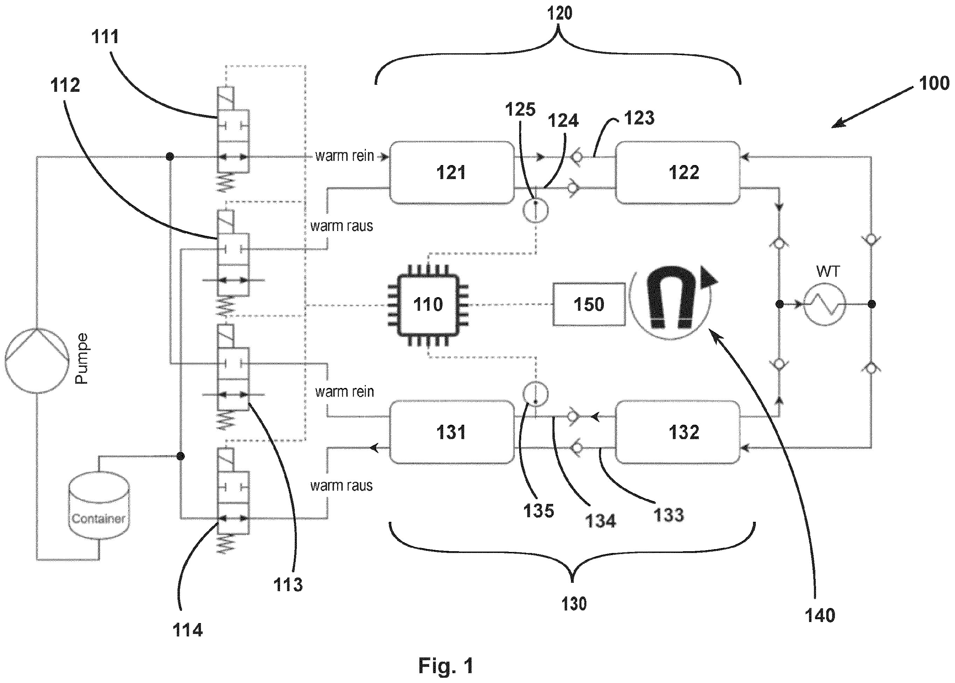

**Fig. 1** zeigt eine erfindungsgemäße Vorrichtung zur dynamischen Ventilsteuerung, die im Ganzen mit 100 bezeichnet ist, in einem magnetokalorischen Heiz- und Kühlgerät. Der beispielhafte Aufbau ist hierbei derjenige eines magnetokalorischen Kühl- und Heizgeräts im Betriebsmodus "Kühlen". Die Vorrichtung ist als Teil eines Hydraulikkreises dargestellt, der von einem Fluid durchströmt wird. Im Betrieb strömt das Fluid allerdings nicht in dem Sinne durch den Hydraulikkreis, dass ein Fluidteilchen sich kontinuierlich durch den Hydraulikkreis bewegt. Vielmehr ist durch den später beschriebenen kontinuierlichen Wechsel der Strömungsrichtung die von einem Teilchen relativ zu einem Fixpunkt zurückgelegte Strecke sehr gering. Im Idealfall oszilliert ein Teilchen nur um den Fixpunkt herum, während Wärme sukzessive bezogen auf Fig. 1 von rechts nach links durch den Hydraulikkreis wandert. Es ist also in der Realität vielmehr die Wärme, welche durch den Hydraulikkreis transportiert/geschoben wird, während das Fluid nur als Wärmespeicher bzw. Wärmeübertrager agiert, im Wesentlichen aber nicht selbst im herkömmlichen Sinne strömt. Der besseren Anschaulichkeit halber und um unhandliche Formulierungen zu vermeiden, ist in der nachfolgenden Beschreibung dennoch ein Strömen des Fluids beschrieben. Dieses Strömen ist aber so wie voranstehend erläutert zu verstehen.

Das magnetokalorische Kühl- und Heizgerät kann gedanklich in drei Teile unterteilt werden. Der linke Teil umfasst eine Pumpe und einen Container, während der mittlere Teil die eigentliche Vorrichtung 100 umfasst. Der rechte Teil besteht aus Leitungen und einem Wärmetauscher (WT), wobei auch ein zusätzlicher Wärmetauscher auf der linken Seite, bspw. zwischen Container und Pumpe denkbar ist. Alle drei Teile des magnetokalorischen Kühl- und Heizgeräts sind Teil eines Hydraulikkreises und durch Leitungen miteinander verbunden, wobei Verbindungsstellen zwischen mehreren Leitungen durch schwarz gefärbte Kreise dargestellt sind. Innerhalb der Vorrichtung 100 sind jeweils zwei räumlich voneinander getrennte aktive magnetische Regeneratoren 121, 122 bzw. 131, 132 hydraulisch in Reihe geschaltet und bilden jeweils ein Regeneratorpaar 120 bzw. 130.

Die aktiven magnetischen Regeneratoren 121, 122, 131, 132 jeweils eines Regeneratorpaares 120, 130 sind untereinander über zwei Verbindungsleitungen 123, 124 bzw. 133, 134 miteinander verbunden, durch welche das Fluid strömen kann. Entsprechend sind beim Regeneratorpaar 120 die aktiven magnetischen Regeneratoren 121, 122 über die Verbindungsleitungen 123, 124 verbunden, während beim Regeneratorpaar 130 die aktiven magnetischen Regeneratoren 131, 132 über die Verbindungsleitungen 133, 134 verbunden sind. Jede der Verbindungsleitungen 123, 124 bzw. 133, 134 wird von dem Fluid nur in einer Richtung durchströmt. Um dies sicherzustellen, sind die Verbindungsleitungen 123, 124, 133, 134 bevorzugt jeweils mit einem Rückschlagventil versehen. An den Verbindungsleitungen 124 und 134 ist zudem ein Messpunkt vorgesehen, an dem jeweils ein Temperatursensor 125 bzw. 135 die Temperatur des Fluids misst.

In der Praxis sind jeweils zwei aktive magnetische Regeneratoren 121, 122 bzw. 131, 132 auf einem Kreis gegenüberliegend angeordnet und bilden so jeweils eins der Regeneratorpaare 120 bzw. 130. Die schematische Darstellung in Fig. 1 ohne Kreis ist ausschließlich aufgrund der besseren Übersichtlichkeit gewählt. Die beiden Regeneratorpaare 120, 130 sind in der Praxis orthogonal zueinander angeordnet. Im Zentrum des Kreises befindet sich ein rotierbarer Magnet 140, dessen Drehwinkel von einem Drehwinkelsensor 150 ermittelt wird. Durch die gegenüberliegende paarweise Anordnung der aktiven magnetischen Regeneratoren 121, 122 bzw. 131, 132 wirkt das Magnetfeld des rotierbaren Magneten 140 bei entsprechendem Drehwinkel jeweils gleichzeitig und in gleicher Weise auf die aktiven magnetischen Regeneratoren 121, 122 bzw. 131, 132 eines Regeneratorpaares 120, 130. Es werden entsprechend beide aktiven magnetischen Regeneratoren 121, 122 bzw. 131, 132 gleichzeitig magnetisiert bzw. entmagnetisiert. Durch die orthogonale Anordnung auf dem Kreis wird bei entsprechendem Drehwinkel des rotierbaren Magneten 140 eines der Regeneratorpaare 120, 130 magnetisiert während das andere Regeneratorpaar 120, 130 entmagnetisiert wird. Denkbar ist es auch, mehr als zwei Regeneratorpaare 120, 130 auf dem Kreis anzuordnen, wobei jeweils zwei der Regeneratorpaare orthogonal zueinander angeordnet sind. Beispielsweise würden sich so bei 4 Regeneratorpaaren zwei um 45 ° gegeneinander verdrehte Kreuze ergeben, deren Spitzen alle auf dem Kreis liegen, wobei jeweils gegenüberliegend zwei aktive magnetische Regeneratoren ein Regeneratorpaar bilden.

Der aktive magnetische Regenerator 121 ist über ein Einlassventil 111 mit der Pumpe und über ein Auslassventil 112 mit dem Container verbunden. Der aktive magnetische Regenerator 131 ist analog über ein Einlassventil 113 mit der Pumpe und über ein Auslassventil 114 mit dem Container verbunden. Die Pumpe auf der linken Seite dient dem Beaufschlagen des Fluids mit Druck. Der Container dient in erster Linie dem Vorhalten einer ausreichenden Menge Fluid, um sämtliche Hohlräume mit Fluid füllen zu können. Es ist nämlich denkbar, dass einzelne Elemente des Hydraulikkreises elastisch ausgebildet sind.

Die Vorrichtung 100 weist zudem eine Ventilsteuereinheit 110 auf, die mit den Einlassventilen 111, 113 und den Auslassventilen 112, 114 verbunden ist und diese steuert. Das Steuern bezieht sich auf das Öffnen und Schließen der Ventile, wodurch die Ventilschaltzeiten angepasst werden. Es werden durch die Ventilsteuereinheit 110 also die Zeitintervalle, in denen das Ventil geöffnet bzw. geschlossen ist verlängert bzw. verkürzt. Zudem ist die Ventilsteuereinheit 110 mit den Temperatursensoren 125, 135 und dem Drehwinkelsensor 150 verbunden.

In dem Hydraulikkreis wird mit Hilfe der auf der linken Seite dargestellten Pumpe ein Fluid mit Druck beaufschlagt und strömt durch den Hydraulikkreis. Dabei wird in schneller Folge die Strömungsrichtung des Fluids durch entsprechende Steuerung der Einlassventile 111, 113 und der Auslassventile 112, 114 wiederholt umgekehrt. Übliche Frequenzen für die Umkehr der Strömungsrichtung liegen bspw. zwischen 0,1 und 50 Hz. Die Umkehr der Strömungsrichtung erfolgt synchron zur Magnetisierung und Entmagnetisierung des magnetokalorischen Materials innerhalb der aktiven magnetischen Regeneratoren 120, 121, 131, 132. Die Magnetisierung und Entmagnetisierung wird dabei durch den rotierbaren Magneten 140 bewirkt. In erster Näherung werden die Schaltzeitpunkte der Ventile also durch den aktuellen Drehwinkel des rotierenden Magneten 140 vorgegeben.

Der Hydraulikkreis ist so ausgelegt, dass jeweils beide aktiven magnetischen Regeneratoren 121, 122 bzw. 131, 132 eines Regeneratorpaares 120, 130 den gleichen Schritt eines magnetokalorischen Zyklus durchlaufen. Ein solcher magnetokalorischer Zyklus kann gedanklich in vier Schritte unterteilt werden, während derer die Einlassventile 111, 113 und die Auslassventile 112, 114 entsprechend geschaltet werden (in Fig. 1 ist die Stellung der Ventile dargestellt, während die aktiven magnetischen Regeneratoren 121 und 122 sich gerade in Schritt 4, dem "cold-blow" befinden, während sich die aktiven magnetischen Regeneratoren 131 und 132 gerade in Schritt 2 befinden, dem "hot-blow"). Die vier Schritte des magnetokalorischen Zyklus werden nachfolgend anhand des in Fig. 1 dargestellten Betriebszustand beschrieben. Da die Schritte nacheinander ablaufen, ist an entsprechender Stelle gekennzeichnet, wenn der betreffende Schritt in Fig. 1 nicht zu sehen ist. Zudem befindet sich das eine Regeneratorpaare stets in dem komplementären Zustand zum anderen. Wird also bspw. gerade Regeneratorpaar 130 magnetisiert (vgl. Schritt 1), wird das Regeneratorpaar 120 gerade entmagnetisiert und andersherum. Der besseren Übersicht halber ist nachfolgend jeweils pro Schritt nur der Zustand desjenigen Regeneratorpaares 120, 130 beschrieben, das sich gerade in dem in Fig. 1 gezeigten Zustand befindet bzw. einen Schritt vor diesem befand.

### Schritt 1 (Magnetisierung, nicht in Fig. 1 zu sehen)

Die aktiven magnetischen Regeneratoren 131, 132 werden gleichzeitig von dem rotierbaren Magneten 140 magnetisiert, wodurch sich das magnetokalorische Material aufgrund des magnetokalorischen Effekts erwärmt und Wärme an das umgebende Fluid abgibt. Infolgedessen erwärmt sich das Fluid innerhalb der aktiven magnetischen Regeneratoren 131, 132.

### Schritt 2 ("hot-blow", wird in Fig. 1 gerade von den aktiven magnetischen Regeneratoren 131 und 132 durchlaufen)

Das in den aktiven magnetischen Regeneratoren 131 und 132 durch Magnetisierung erwärmte Fluid strömt bezogen auf die Darstellungen in Fig. 1 von rechts nach links durch die beiden aktiven magnetischen Regeneratoren 131, 132, wobei es die Verbindungsleitung 134 durchströmt. Das Ventil 114 zum Container hin ist geöffnet, das Ventil 113 für von der Pumpe kommendes Fluid ist geschlossen. Das erwärmte Fluid strömt entsprechend Richtung Container.

### Schritt 3 (Entmagnetisierung, nicht in Fig. 1 zu sehen)

Beide aktiven magnetischen Regeneratoren 121, 122 werden gleichzeitig von dem rotierbaren Magneten 140 entmagnetisiert, wodurch sich das magnetokalorische Material aufgrund des magnetokalorischen Effekts abkühlt und die Wärme des umgebenden Fluids aufnimmt. Als Folge davon kühlt sich das Fluid innerhalb der aktiven magnetischen Regeneratoren 121, 122 ab.

### Schritt 4 ("cold-blow" wird in Fig. 1 gerade von den aktiven magnetischen Regeneratoren 121 und 122 durchlaufen)

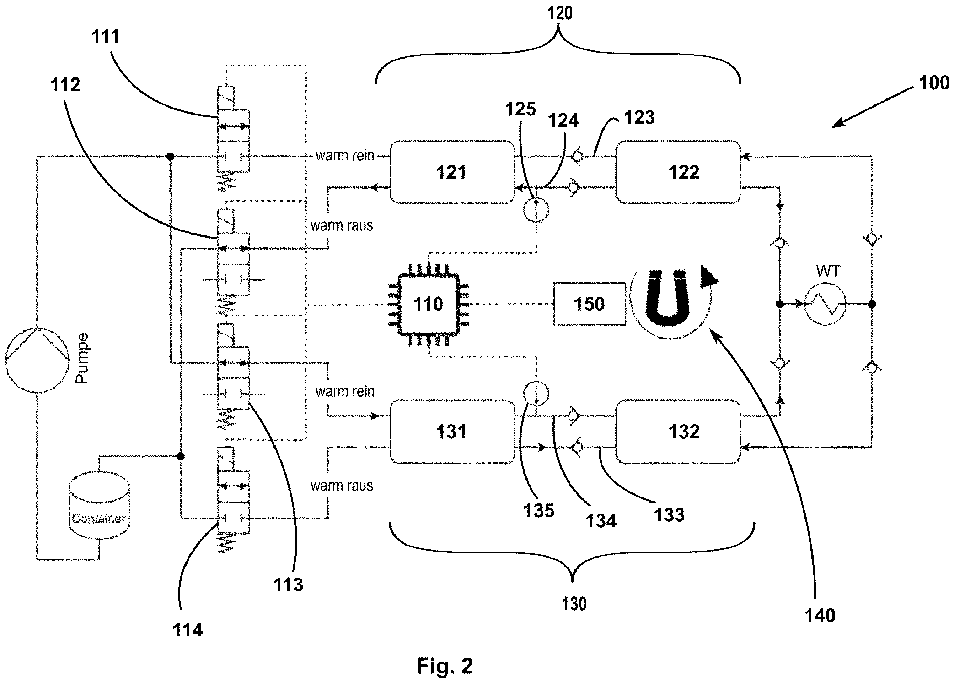

Das in den aktiven magnetischen Regeneratoren 121, 122 abgekühlte Fluid strömt bezogen auf die Darstellung in Fig. 1 von links nach rechts durch die aktiven magnetischen Regeneratoren 121, 122, wobei es die Verbindungsleitung 123 durchströmt. Das abgekühlte Fluid strömt in den Wärmetauscher und nimmt in diesem Wärme auf. Das Ventil 111 für von der Pumpe kommendes Fluidweitergedreht. In diesem Zustand durchlaufen die aktiven magnetischen Regeneratoren 121, 122 gerade den "hot-blow"-Schritt. Das in den aktiven magnetischen Regeneratoren 121, 122 durch vorherige Magnetisierung erwärmte Fluid strömt bezogen auf die Darstellungen in Fig. 2 von rechts nach links wobei es die Verbindungsleitung 124 durchströmt. Der Teil des Fluids, welcher im Wärmetauscher Wärme aufgenommen hat, strömt entsprechend aus dem Wärmetauscher heraus. Das Ventil 112 zum Container hin ist geöffnet, das Ventil 111 für von der Pumpe kommendes Fluid ist geschlossen. Das erwärmte Fluid strömt entsprechend Richtung Container.

Die aktiven magnetischen Regeneratoren 131, 132 durchlaufen gerade den "cold-blow"-Schritt. Das in den aktiven magnetischen Regeneratoren 131, 132 abgekühlte Fluid strömt bezogen auf die Darstellung in Fig. 2 von links nach rechts durch die aktiven magnetischen Regeneratoren 131, 132 wobei es die Verbindungsleitung 133 durchströmt. Ein Teil des abgekühlten Fluids strömt in den Wärmetauscher und nimmt in diesem Wärme auf. Das Ventil 113 für von der Pumpe kommendes Fluid ist geöffnet, das Ventil 114 zum Container hin geschlossen. Das Fluid strömt entsprechend von der Pumpe in die aktiven magnetischen Regeneratoren 131, 132.

Wären vier zusätzliche aktive magnetische Regeneratoren jeweils orthogonal zu den in Fig. 1 und 2 gezeigten vier aktiven magnetischen Regeneratoren angeordnet, sodass ein orthogonales Kreuz aus vier gedachten sich jeweils gegenüberliegenden Regeneratorpaaren gebildet wäre (nicht in Fig. 1 oder 2 gezeigt), würden bereits bei Rotation des Magneten um 90° jeweils zwei andere aktive magnetische Regeneratoren den "hot blow"-Schritt und die gegenüberliegenden zwei aktiven magnetischen Regeneratoren den "cold blow"-Schritt durchlaufen. Dieses Prinzip lässt sich durch weitere entsprechende symmetrische Anordnung auch auf eine noch höhere Anzahl von aktiven magnetischen Regeneratoren ausweiten, wobei der für einen Wechsel der Schritte innerhalb des magnetokalorischen Zyklus notwendige Drehwinkel des Magneten mit steigender Zahl der aktiven magnetischen Regeneratoren abnimmt. Anstelle eines in den Figuren 1 und 2 gezeigten 2-poligen Magnetsystems sind bspw. auch 4-polige Magnetsysteme denkbar, bei denen sich der Magnet entsprechend nur um die Hälfte des Winkels weiterdrehen muss, den ein 2-poliges Magnetsystem erfordern würde, um andere aktive magnetische Regeneratoren den entsprechenden "hot-blow"- bzw. "cold blow"-Schritt durchlaufen zu lassen.

### Bezugszeichenliste

- 100: Vorrichtung zur dynamischen Ventilsteuerung eines magnetokalorischen Heiz- und/oder Kühlgeräts
- 110: Ventilsteuereinheit
- 111: Einlassventil
- 112: Auslassventil
- 113: Einlassventil
- 114: Auslassventil
- 120: Regeneratorpaar
- 121: aktiver magnetischer Regenerator
- 122: aktiver magnetischer Regenerator
- 123: Verbindungsleitung
- 124: Verbindungsleitung
- 125: Temperatursensor
- 130: Regeneratorpaar
- 131: aktiver magnetischer Regenerator
- 132: aktiver magnetischer Regenerator
- 133: Verbindungsleitung
- 134: Verbindungsleitung
- 135: Temperatursensor
- 140: rotierbarer Magnet
- 150: Drehwinkelsensor
- 200: Verfahren

### Verzeichnis der Nichtpatentliteratur

[1] D. Eriksen, K. Engelbrecht, C. R. H. Bahl, R. Bjørk, K. K. Nielsen, A. R. Insinga, N. Pryds, International Journal of Refrigeration 2015, 58, 14-21.
[2] D. Eriksen, K. Engelbrecht, C. R. H. Bahl, R. Bjork, K. K. Nielsen, Appl. Therm. Eng. 2016, 103, 1-8.
[3] M. Masche, J. Liang, S. Dall'Olio, K. Engelbrecht, C. R. H. Bahl, Applied Thermal Engineering 2021, 199, 117569.
[4] M. Masche, J. Liang, K. Engelbrecht, C. R. H. Bahl, Applied Thermal Engineering 2022, 204, 117947.

## Patentansprüche

1. Vorrichtung (100) zur dynamischen Ventilsteuerung in einem magnetokalorischen Heiz- und/oder Kühlgerät,
wobei die Vorrichtung (100) die folgenden Komponenten aufweist:
- eine Ventilsteuereinheit (110);
- eine Mehrzahl aktiver magnetischer Regeneratoren (121, 122, 131, 132), wobei die aktiven magnetischen Regeneratoren (121, 122, 131, 132) derart ausgebildet sind, dass sie in einer ersten und in einer zweiten Strömungsrichtung von einem Fluid durchströmt werden können;
- eine Mehrzahl von Temperatursensoren (125, 135), wobei die Temperatursensoren (125, 135) mit der Ventilsteuereinheit (110) verbunden und eingerichtet sind, die Temperatur des Fluids an einem Messpunkt zu ermitteln und die ermittelte Temperatur an die Ventilsteuereinheit (110) zu übertragen,
- Einlassventile (111, 113) und Auslassventile (112, 114), wobei die Einlassventile (111, 113) und die Auslassventile (112, 114) das Durchströmen des Fluids durch die aktiven magnetischen Regeneratoren (121, 122, 131, 132) regeln und eingerichtet sind, durch die Ventilsteuereinheit (110) gesteuert zu werden;
- und wobei die Ventilsteuereinheit (110) die übertragenen Temperaturen auswertet und in Abhängigkeit des Ergebnisses der Auswertung die Einlassventile (111, 113) und Auslassventile (112, 114) steuert;
- wobei jeweils zwei aktive magnetische Regeneratoren (121, 122, 131, 132) hydraulisch in Reihe geschaltet sind und ein Regeneratorpaar (120, 130) bilden, wobei die Vorrichtung (100) eine Mehrzahl Regeneratorpaare (120, 130) aufweist;
wobei die aktiven magnetischen Regeneratoren (121, 122, 131, 132) eines Regeneratorpaares (120, 130) durch zwei Verbindungsleitungen (123, 124, 133, 134) miteinander verbunden sind;
und wobei das Fluid je Strömungsrichtung nur eine der Verbindungsleitungen (123, 124, 133, 134) durchströmt;
- und wobei die Messpunkte an Verbindungsleitungen (123, 124, 133, 134) angeordnet sind, welche in gleicher Richtung von dem Fluid durchströmt werden; und
- wobei mehrere Regeneratorpaare (120, 130) hydraulisch parallel geschaltet sind;
- und wobei die Steuerung der Einlassventile (111, 113) und der Auslassventile (112, 114) derart erfolgt, dass die Differenz zwischen den im Bereich verschiedener Regeneratorpaare (120, 130) ermittelten Temperaturen minimiert wird.

2. Vorrichtung (100) zur dynamischen Ventilsteuerung in einem magnetokalorischen Heiz- und/oder Kühlgerät,
wobei die Vorrichtung (100) die folgenden Komponenten aufweist:
- eine Ventilsteuereinheit (110);
- eine Mehrzahl aktiver magnetischer Regeneratoren (121, 122, 131, 132), wobei die aktiven magnetischen Regeneratoren (121, 122, 131, 132) derart ausgebildet sind, dass sie in einer ersten und in einer zweiten Strömungsrichtung von einem Fluid durchströmt werden können;
- eine Mehrzahl von Temperatursensoren (125, 135), wobei die Temperatursensoren (125, 135) mit der Ventilsteuereinheit (110) verbunden und eingerichtet sind, die Temperatur des Fluids an einem Messpunkt zu ermitteln und die ermittelte Temperatur an die Ventilsteuereinheit (110) zu übertragen,
- Einlassventile (111, 113) und Auslassventile (112, 114), wobei die Einlassventile (111, 113) und die Auslassventile (112, 114) das Durchströmen des Fluids durch die aktiven magnetischen Regeneratoren (121, 122, 131, 132) regeln und eingerichtet sind, durch die Ventilsteuereinheit (110) gesteuert zu werden;
- und wobei die Ventilsteuereinheit (110) die übertragenen Temperaturen auswertet und in Abhängigkeit des Ergebnisses der Auswertung die Einlassventile (111, 113) und Auslassventile (112, 114) steuert;
- wobei mehr als zwei aktive magnetische Regeneratoren (121, 122, 131, 132) hydraulisch in Reihe geschaltet sind und eine Regeneratorkaskade bilden, wobei die Vorrichtung (100) eine Mehrzahl Regeneratorkaskaden aufweist;
wobei zwei benachbarte aktive magnetische Regeneratoren (121, 122, 131, 132) innerhalb einer Regeneratorkaskade durch zwei Verbindungsleitungen (123, 124, 133, 134) miteinander verbunden sind.
und wobei das Fluid je Strömungsrichtung nur eine der Verbindungsleitungen (123, 124, 133, 134) durchströmt;
und wobei die Messpunkte an Verbindungsleitungen (123, 124, 133, 134) angeordnet sind, welche in gleicher Richtung von dem Fluid durchströmt werden;
wobei mehrere Regeneratorkaskaden hydraulisch parallel geschaltet sind;
- und wobei die Steuerung der Einlassventile (111, 113) und der Auslassventile (112, 114) derart erfolgt, dass die Differenz zwischen den im Bereich verschiedener Regeneratorkaskaden ermittelten Temperaturen minimiert wird.

3. Vorrichtung (100) nach Anspruch 1 oder 2,
wobei die Messpunkte an funktionsgleichen Ein- bzw. Auslässen unterschiedlicher aktiver magnetischer Regeneratoren (121, 122, 131, 132), bevorzugt im gleichen Abstand zum entsprechenden aktiven magnetischen Regenerator (121, 122, 131, 132), angeordnet sind.

4. Vorrichtung (100) nach einem der vorhergehenden Ansprüche,
wobei mehrere aktive magnetische Regeneratoren (121, 122, 131, 132) hydraulisch in Reihe geschaltet sind;

5. Vorrichtung (100) nach einem der vorhergehenden Ansprüche,
wobei die Ventilsteuereinheit (110) einen PI-Regler aufweist;
und wobei die Einlassventile (111, 113) und Auslassventile (112, 114) elektromechanische Umschaltventile sind.

6. Vorrichtung (100) nach einem der vorhergehenden Ansprüche,
mit einem rotierbaren Magneten (140), wobei der rotierbare Magnet (140) im Betrieb in magnetische Wechselwirkung mit den aktiven magnetischen Regeneratoren tritt;
und mit einem Drehwinkelsensor (150), wobei der Drehwinkelsensor (150) mit der Ventilsteuereinheit (110) verbunden und eingerichtet ist, den Drehwinkel des rotierbaren Magneten (140) zu ermitteln und an die Ventilsteuereinheit (110) zu übertragen;
und wobei die Ventilsteuereinheit (110) den übertragenen Drehwinkel auswertet und zusätzlich zur Abhängigkeit des Ergebnisses der Auswertung der Temperaturen auch in Abhängigkeit des Ergebnisses der Auswertung des Drehwinkels die Einlassventile (111, 113) und die Auslassventile (112, 114).

7. Verfahren (200) zur dynamischen Ventilsteuerung in einem magnetokalorischen Heiz- und Kühlgerät mit den folgenden Schritten:
- Eine Vorrichtung (100) gemäß einem der Ansprüche 1, oder 3 bis 6 wenn abhängig von Anspruch 1 wird zur Verfügung gestellt;
- Die Temperatur des Fluids wird an mehreren Messpunkten ermittelt;
- Die ermittelten Temperaturen werden an die Ventilsteuereinheit (110) übertragen;
- Die übertragenen Temperaturen werden von der Ventilsteuereinheit (110) ausgewertet;
- Die Einlassventile (111, 113) und die Auslassventile (112, 114) werden in Abhängigkeit des Ergebnisses der Auswertung derart gesteuert, dass die Differenz zwischen den innerhalb verschiedener Regeneratorpaare (120, 130) ermittelten Temperaturen minimiert wird.

8. Verfahren (200) zur dynamischen Ventilsteuerung in einem magnetokalorischen Heiz- und Kühlgerät mit den folgenden Schritten:
- Eine Vorrichtung (100) gemäß einem der Ansprüche 2 oder 3 bis 6 wenn abhängig von Anspruch 2 wird zur Verfügung gestellt;
- Die Temperatur des Fluids wird an mehreren Messpunkten ermittelt;
- Die ermittelten Temperaturen werden an die Ventilsteuereinheit (110) übertragen;
- Die übertragenen Temperaturen werden von der Ventilsteuereinheit (110) ausgewertet;
- Die Einlassventile (111, 113) und die Auslassventile (112, 114) werden in Abhängigkeit des Ergebnisses der Auswertung derart gesteuert, dass die Differenz zwischen den innerhalb verschiedener Regeneratorkaskaden ermittelten Temperaturen minimiert wird.

9. Verfahren (200) gemäß einem der Ansprüche 7 bis 8 mit den folgenden zusätzlichen Schritten:
- Eine Vorrichtung (100) gemäß Anspruch 6 wird zur Verfügung gestellt;
- Der Drehwinkel des rotierbaren Magneten (140) wird ermittelt;
- Der ermittelte Drehwinkel wird an die Ventilsteuereinheit (110) übertragen;
- Der übertragene Drehwinkel wird von der Ventilsteuereinheit (110) ausgewertet;
- Die Einlassventile (111, 113) und die Auslassventile (112, 114) werden sowohl in Abhängigkeit des Ergebnisses der Auswertung der Temperaturen als auch in Abhängigkeit des Ergebnisses der Auswertung des Drehwinkels gesteuert.

## Claims

1. A device (100) for dynamic valve control in a magnetocaloric heater and/or cooler,
wherein the device (100) has the following components:
- a valve control unit (110);
- a plurality of active magnetic regenerators (121, 122, 131, 132), wherein the active magnetic regenerators (121, 122, 131, 132) are designed in such a way that a fluid can flow through them in a first and in a second direction of flow;
- a plurality of temperature sensors (125, 135), wherein the temperature sensors (125, 135) are connected with the valve control unit (110) and set up to determine the temperature of the fluid at a measuring point, and to transmit the determined temperature to the valve control unit (110);
- inlet valves (111, 113) and outlet valves (112, 114), wherein the inlet valves (111, 113) and the outlet valves (112, 114) regulate the flow of fluid through the active magnetic regenerators (121, 122, 131, 132), and are set up to be controlled by the valve control unit (110);
- and wherein the valve control unit (110) evaluates the transmitted temperatures and controls the inlet valves (111, 113) and outlet valves (112, 114) depending on the evaluation result;
- wherein a respective two active magnetic regenerators (121, 122, 131, 132) are hydraulically series connected and form a regenerator pair (120, 130), wherein the device (100) has a plurality of regenerator pairs (120, 130);
wherein the active magnetic regenerators (121, 122, 131, 132) of a regenerator pair (120, 130) are connected with each other by two connecting lines (123, 124, 133, 134);
and wherein the fluid flows through only one of the connecting lines (123, 124, 133, 134) per direction of flow;
- and wherein the measuring points are arranged on connecting lines (123, 124, 133, 134), through which the fluid flows in the same direction; and
- wherein several regenerator pairs (120, 130) are hydraulically parallel connected;
- and wherein the inlet valves (111, 113) and the outlet valves (112, 114) are controlled in such a way as to minimize the difference between the temperatures determined in the area of different regenerator pairs (120, 130).

2. A device (100) for dynamic valve control in a magnetocaloric heater and/or cooler,
wherein the device (100) has the following components:
- a valve control unit (110);
- a plurality of active magnetic regenerators (121, 122, 131, 132), wherein the active magnetic regenerators (121, 122, 131, 132) are designed in such a way that a fluid can flow through them in a first and in a second direction of flow;
- a plurality of temperature sensors (125, 135), wherein the temperature sensors (125, 135) are connected with the valve control unit (110) and set up to determine the temperature of the fluid at a measuring point, and to transmit the determined temperature to the valve control unit (110);
- inlet valves (111, 113) and outlet valves (112, 114), wherein the inlet valves (111, 113) and the outlet valves (112, 114) regulate the flow of fluid through the active magnetic regenerators (121, 122, 131, 132), and are set up to be controlled by the valve control unit (110);
- and wherein the valve control unit (110) evaluates the transmitted temperatures and controls the inlet valves (111, 113) and outlet valves (112, 114) depending on the evaluation result;
- wherein more than two active magnetic regenerators (121, 122, 131, 132) are hydraulically series connected and form a regenerator cascade, wherein the device (100) has a plurality of regenerator cascades;
wherein two adjacent active magnetic regenerators (121, 122, 131, 132) are connected with each other within a regenerator cascade by two connecting lines (123, 124, 133, 134),
and wherein the fluid flows through only one of the connecting lines (123, 124, 133, 134) per direction of flow;
and wherein the measuring points are arranged on connecting lines (123, 124, 133, 134), through which the fluid flows in the same direction;
wherein several regenerator cascades are hydraulically parallel connected;
- and wherein the inlet valves (111, 113) and the outlet valves (112, 114) are controlled in such a way as to minimize the difference between the temperatures determined in the area of different regenerator cascades.

3. The device (100) according to claim 1 or 2,
wherein the measuring points are arranged at functionally identical inlets and outlets of different active magnetic regenerators (121, 122, 131, 132), preferably at the same distance to the corresponding active magnetic regenerator (121, 122, 131, 132).

4. The device (100) according to one of the preceding claims,
wherein several active magnetic regenerators (121, 122, 131, 132) are hydraulically connected in series.

5. The device (100) according to one of the preceding claims,
wherein the valve control unit (110) has a PI controller,
and wherein the inlet valves (111, 113) and outlet valves (112, 114) are electromechanical changeover valves.

6. The device (100) according to one of the preceding claims,
with a rotatable magnet (140), wherein the rotatable magnet (140) magnetically interacts with the active magnetic regenerators during operation;
and with a rotational angle sensor (150), wherein the rotational angle sensor (150) is connected with the valve control unit (110), and set up to determine the rotational angle of the rotatable magnet (140) and transmit it to the valve control unit (110);
and wherein the valve control unit (110) evaluates the transmitted rotational angle, and the inlet valves (111, 113) and the outlet valves (112, 114) also depending on the rotational angle evaluation result in addition to depending on the temperature evaluation result.

7. A method (200) for dynamic valve control in a magnetocaloric heater and/or cooler with the following steps:
- a device (100) according to one of claims 1 or 3 to 6 if dependent on claim 1 is provided;
- the temperature of the fluid is determined at several measuring points;
- the determined temperatures are transmitted to the valve control unit (110);
- the transmitted temperatures are evaluated by the valve control unit (110);
- the inlet valves (111, 113) and the outlet valves (112, 114) are controlled as a function of the evaluation result in such a way as to minimize the difference between the temperatures determined within different regenerator pairs (120, 130).

8. A method (200) for dynamic valve control in a magnetocaloric heater and/or cooler with the following steps:
- a device (100) according to one of claims 2 or 3 to 6 if dependent on claim 2 is provided;
- the temperature of the fluid is determined at several measuring points;
- the determined temperatures are transmitted to the valve control unit (110);
- the transmitted temperatures are evaluated by the valve control unit (110);
- the inlet valves (111, 113) and the outlet valves (112, 114) are controlled as a function of the evaluation result in such a way as to minimize the difference between the temperatures determined within different regenerator cascades.

9. The method (200) according to one of claims 7 to 8 with the following additional steps:
- a device (100) according to claim 6 is provided;
- the rotational angle of the rotatable magnets (140) is determined;
- the determined rotational angle is transmitted to the valve control unit (110);
- the transmitted rotational angle is evaluated by the valve control unit (110);
- the inlet valves (111, 113) and the outlet valves (112, 114) are controlled both depending on the temperature evaluation result and depending on the rotational angle evaluation result.

## Revendications

1. Dispositif (100), destiné à la commande dynamique d'une vanne dans un appareil de chauffage et/ou de refroidissement magnétocalorique,
le dispositif (100) comportant les composants suivants :
- une unité de commande (110) de vanne ;
- une pluralité de régénérateurs (121, 122, 131, 132) magnétiques actifs, les régénérateurs (121, 122, 131, 132) magnétiques actifs étant conçus de sorte à pouvoir être traversés dans une première et dans une deuxième direction d'écoulement par un fluide ;
- une pluralité de capteurs de température (125, 135), les capteurs de température (125, 135) étant connectés avec l'unité de commande (110) de vanne et configurés pour déterminer la température du fluide sur un point de mesure et pour transférer la température déterminée à l'unité de commande (110) de vanne,
- des vannes d'entrée (111, 113) et des vannes de sortie (112, 114), les vannes d'entrée (111, 113) et les vannes de sortie (112, 114) régulant la circulation du fluide à travers les régénérateurs (121, 122, 131, 132) magnétiques actifs et étant configurées pour être commandées par l'unité de commande (110) de vanne ;
- et l'unité de commande (110) de vanne évaluant les températures transférées et en fonction du résultat de l'évaluation, commandant les vannes d'entrée (111, 113) et les vannes de sortie (112, 114) ;
- chaque fois deux régénérateurs magnétiques (121, 122, 131, 132) actifs étant hydrauliquement montés en série et constituant une paire de régénérateurs (120, 130), le dispositif (100) comportant une pluralité de paires de régénérateurs (120, 130) ;
les régénérateurs (121, 122, 131, 132) magnétiques actifs d'une paire de régénérateurs (120, 130) étant connectés l'un avec l'autre par deux lignes de connexion (123, 124, 133, 134) ;
et le fluide ne circulant qu'à travers l'un des lignes de connexion (123, 124, 133, 134) dans chaque direction d'écoulement ;
- et les points de mesure étant placés sur des lignes de connexion (123, 124, 133, 134), lesquels sont traversés dans la même direction par le fluide ; et
- plusieurs paires de régénérateurs (120, 130) étant hydrauliquement montées en parallèle ;
- et la commande des vannes d'entrée (111, 113) et des vannes de sortie (112, 114) ayant lieu de telle sorte, que la différence entre les températures déterminées dans la région de différentes paires de régénérateurs (120, 130) soit minimisée.

2. Dispositif (100), destiné à la commande dynamique d'une vanne dans un appareil de chauffage et/ou de refroidissement magnétocalorique,
le dispositif (100) comportant les composants suivants :
- une unité de commande (110) de vanne ;
- une pluralité de régénérateurs (121, 122, 131, 132) magnétiques actifs, les régénérateurs (121, 122, 131, 132) magnétiques actifs étant conçus de sorte à pouvoir être traversés dans une première et dans une deuxième direction d'écoulement par un fluide ;
- une pluralité de capteurs de température (125, 135), les capteurs de température (125, 135) étant connectés avec l'unité de commande (110) de vanne et configurés pour déterminer la température du fluide sur un point de mesure et pour transférer la température déterminée à l'unité de commande (110) de vanne,
- des vannes d'entrée (111, 113) et des vannes de sortie (112, 114), les vannes d'entrée (111, 113) et les vannes de sortie (112, 114) régulant la circulation du fluide à travers les régénérateurs (121, 122, 131, 132) magnétiques actifs et étant configurées pour être commandées par l'unité de commande (110) de vanne ;
- et l'unité de commande (110) de vanne évaluant les températures transférées et en fonction du résultat de l'évaluation, commandant les vannes d'entrée (111, 113) et les vannes de sortie (112, 114) ;
- plus de deux régénérateurs magnétiques (121, 122, 131, 132) actifs étant hydrauliquement montés en série et constituant une cascade de régénérateurs, le dispositif (100) comportant une pluralité de cascades de régénérateurs ;
deux régénérateurs magnétiques (121, 122, 131, 132) actifs voisins étant connectés l'un avec l'autre à l'intérieur d'une cascade de régénérateurs par deux lignes de connexion (123, 124, 133, 134) ;
et le fluide ne circulant qu'à travers l'un des lignes de connexion (123, 124, 133, 134) dans chaque direction d'écoulement ;
et les points de mesure étant placés sur des lignes de connexion (123, 124, 133, 134), lesquels sont traversés dans la même direction par le fluide ;
plusieurs cascades de régénérateurs étant hydrauliquement montées en parallèle ;
- et la commande des vannes d'entrée (111, 113) et des vannes de sortie (112, 114) ayant lieu de telle sorte, que la différence entre les températures déterminées dans la région de différentes cascades de régénérateurs soit minimisée.

3. Dispositif (100) selon la revendication 1 ou 2,
les points de mesure étant placés sur des entrées ou sorties de fonction identique de différents régénérateurs (121, 122, 131, 132) magnétiques actifs, de manière préférentielle, avec un même écart par rapport au régénérateur magnétique (121, 122, 131, 132) actif correspondant.

4. Dispositif (100) selon l'une quelconque des revendications précédentes,
plusieurs régénérateurs magnétiques (121, 122, 131, 132) actifs étant hydrauliquement montés en série.

5. Dispositif (100) selon l'une quelconque des revendications précédentes,
l'unité de commande (110) de vanne comportant un régulateur PI ;
et les vannes d'entrée (111, 113) et les vannes de sortie (112, 114) étant des vannes d'inversion électromécaniques.

6. Dispositif (100) selon l'une quelconque des revendications précédentes,
doté d'un aimant (140) rotatif, l'aimant (140) rotatif entrant en fonctionnement en interaction magnétique avec les régénérateurs magnétiques actifs ;
et doté d'un capteur (150) d'angle de rotation, le capteur (150) d'angle de rotation étant connecté avec l'unité de commande (110) de vanne et configuré pour déterminer l'angle de rotation de l'aimant (140) rotatif et le transférer à l'unité de commande (110) de vanne ;
et l'unité de commande (110) de vanne évaluant l'angle de rotation transféré et additionnellement à la dépendance de l'évaluation des températures, commandant les vannes d'entrée (111, 113) et les vannes de sortie (112, 114) également en fonction du résultat de l'évaluation de l'angle de rotation.

7. Procédé (200), destiné à la commande dynamique d'une vanne dans un appareil de chauffage et/ou de refroidissement magnétocalorique, présentant les étapes suivantes, consistant à :
- mettre à disposition un dispositif (100) selon l'une quelconque des revendications 1 ou 3 à 6, si elle dépend de la revendication 1 ;
- déterminer la température du fluide sur plusieurs points de mesure ;
- transférer les températures déterminées à l'unité de commande (110) de vanne ;
- évaluer les températures transférées à l'aide l'unité de commande (110) de vanne ;
- commander les vannes d'entrée (111, 113) et les vannes de sortie (112, 114) en fonction du résultat de l'évaluation, de telle sorte que la différence entre les températures déterminées à l'intérieur de différentes paires de régénérateurs (120, 130) soit minimisée.

8. Procédé (200) destiné à la commande dynamique d'une vanne dans un appareil de chauffage et/ou de refroidissement magnétocalorique, présentant les étapes suivantes, consistant à :
- mettre à disposition un dispositif (100) selon l'une quelconque des revendications 2 ou 3 à 6, si elle dépend de la revendication 2 ;
- déterminer la température du fluide sur plusieurs points de mesure ;
- transférer les températures déterminées à l'unité de commande (110) de vanne ;
- évaluer les températures transférées à l'aide de l'unité de commande (110) de vanne ;
- commander les vannes d'entrée (111, 113) et les vannes de sortie (112, 114) en fonction du résultat de l'évaluation, de telle sorte que la différence entre les températures déterminées à l'intérieur de différentes cascades de régénérateurs soit minimisée.

9. Procédé (200) selon l'une quelconque des revendications 7 à 8, présentant les étapes additionnelles suivantes, consistant à :
- mettre à disposition un dispositif (100) selon la revendication 6 ;
- déterminer l'angle de rotation de l'aimant (140) rotatif ;
- transférer l'angle de rotation déterminé à l'unité de commande (110) de vanne ;
- évaluer l'angle de rotation à l'aide de l'unité de commande (110) de vanne ;
- commander les vannes d'entrée (111, 113) et les vannes de sortie (112, 114) aussi bien en fonction du résultat de l'évaluation des températures, qu'également en fonction du résultat de l'évaluation de l'angle de rotation.
